Europäisches Patentamt

European Patent Office

Office européen des brevets

(19)

(11) **EP 0 866 426 A1**

(12) **DEMANDE DE BREVET EUROPEEN**

(43) Date de publication:
23.09.1998 Bulletin 1998/39

(51) Int Cl.⁶: **G06T 9/00**

(21) Numéro de dépôt: 98400612.2

(22) Date de dépôt: 16.03.1998

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **17.03.1997 FR 9703212**

(71) Demandeur: **ALCATEL ALSTHOM COMPAGNIE GENERALE D'ELECTRICITE**
**75008 Paris (FR)**

(72) Inventeurs:
• **Gilbert, Frédéric**
**78220 Viroflay (FR)**
• **Ritz, Edouard**
**75013 Paris (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(54) **Sélection dynamique de l'algorithme de compression d'image**

(57) L'invention concerne un procédé d'optimisation de la compression de données d'image en fonction d'au moins un objectif de compression, caractérisé en ce qu'il comprend :

- une phase d'initialisation, comprenant les étapes de :

  - compression d'une pluralité d'échantillons de test, selon au moins deux conditions de compression distinctes ;
  - association à chacun desdits échantillons de test d'au moins une information caractéristique du contenu dudit échantillon et au moins une mesure de résultat de la compression correspondante ;
  - établissement d'au moins une fonction de référence, associant au moins un desdits objectifs de compression et/ou au moins une mesure de résultat de compression et/ou au moins une desdites informations caracténstiques, pour chacune desdites conditions de compression ; et

- une phase de sélection, comprenant, pour chaque ensemble de données d'image à compresser, les étapes de :

  - détermination d'au moins une information caractéristique dudit ensemble de données d'image à compresser ;
  - sélection de la condition de compression optimale qui maximise au moins un desdits objectifs de compression, en fonction de ladite ou desdites informations caractéristiques et desdites fonctions de référence.

Fig. 3

## Description

Le domaine d'invention est celui de la compression d'images, qu'il s'agisse d'images fixes ou d'images animées. Plus précisément, l'invention concerne l'optimisation de la compression, selon un ou plusieurs critères choisis par l'utilisateur.

La compression d'images s'avère en effet nécessaire dans de très nombreux domaines, notamment dans l'objectif d'obtenir des fichiers de taille réduite et/ou pouvant être transmis rapidement.

La transmission rapide d'images, en particulier, devient un point incontournable dans de nombreux domaines d'application, et l'image va prendre une place de plus en plus prépondérante dans les télécommunications.

Toutes les applications multimédia, notamment, nécessitent des transmissions rapides d'images ainsi que des techniques performantes de stockage d'images. Cet impératif se rencontre par exemple dans les domaines concernant les vidéophones, la visio-conférence, les messageries électroniques, le télédiagnostic, la télévision interactive (VOD : "Video On Demand" et IVOD : "Interactive VOD") jusqu'à la télévirtualité. Il en est de même pour les satellites d'observation : l'accroissement de la résolution des instruments les amène à devoir transmettre des quantités de données image de plus en plus grandes.

Dans tous les cas, de nouvelles techniques de compression d'images sont nécessaires pour améliorer le stockage des images et leur transmission, on fonction des débits offerts, en fonction des vitesses de transmissions requises en fonction du temps de transmission voulu et du degré autorisé de perte d'information lors de la transmission.

Les techniques normatives de compression développées depuis 5 ans (JPEG, MPEG) sont principalement basées sur la DCT (Discrete Cosine Transform). Les taux de compression sont généralement inférieurs à 20 pour des images fixes à 80 pour des images animées. L'importance croissante de l'image dans les télécommunications exige l'utilisation de techniques de compression de plus en plus performantes et intelligentes. La compression d'images constitue donc un des enjeux majeurs des futurs outils de télécommunication.

L'invention concerne de tels développements, et s'applique notamment dans le cadre des développements des techniques normatives JPEG et MPEG cités plus haut.

On connaît déjà de nombreux algorithmes de compression. On peut notamment distinguer plusieurs grandes familles d'algorithmes, respectivement basées sur la DCT, la transformée en ondelettes, les fractales IFS, la quantification vectorielle et les "quad-trees" (tetra-arbres).

Chacun de ces algorithmes présentent des avantages et des inconvénients, selon le type d'image considéré, le taux de compression souhaité, et/ou la qualité de reconstruction de l'image souhaitée. En revanche, aucun d'entre eux ne peut garantir des résultats optimaux dans toutes les conditions.

L'idéal serait donc de disposer de l'ensemble de ces algorithmes, et de choisir au cas par cas l'algorithme le plus efficace, en fonction des objectifs fixés.

Cependant, la connaissance a priori de l'algorithme le plus efficace pour répondre à des conditions données et une image donnée est pratiquement impossible pour un utilisateur, notamment si celui-ci n'est pas un spécialiste du traitement des images. Par ailleurs, ce problème est encore renforcé par le fait que la plupart de ces algorithmes nécessitent le réglage d'un ou plusieurs paramètres.

Il n'est pas non plus envisageable d'essayer toutes les configurations possibles (choix de l'algorithme + choix des paramètres) pour chaque image à transmettre ou à stocker.

Les systèmes de compression connus mettent donc en oeuvre un seul type d'algorithme de compression. Ils restent cependant peu aisés à utiliser du fait qu'il est nécessaire de définir un ou plusieurs paramètres.

Par ailleurs, ces différents systèmes fonctionnent par images complètes, alors que les inventeurs ont constaté que, dans de nombreuses situations, seule une partie de cette image présente un intérêt majeur.

L'invention a notamment pour objectif de pallier ces différents inconvénients de l'état de l'art.

Plus précisément, un objectif de l'invention est de fournir un procédé d'optimisation de la compression d'images et/ou de séquences d'images, capables d'optimiser un ou plusieurs critères, ou objectifs de compression, sans nécessiter d'analyse ni de choix a priori d'un utilisateur.

En d'autres termes, l'objectif de l'invention est de fournir un tel procédé qui soit accessible à tout type d'utilisateur, et notamment aux utilisateurs non spécialistes du domaine du traitement de l'image, et qui garantissent une compression optimisée, quel que soit le type de l'image, en fonction des objectifs fixés par cet utilisateur.

Un autre objectif de l'invention est de fournir un tel procédé pouvant assurer la compression optimisée de très nombreux types d'images, quel que soit l'objectif fixé par l'utilisateur (qualité de l'image ou taux de compression).

Ces objectifs, ainsi que d'autres qui apparaîtront par la suite sont atteints selon l'invention à l'aide d'un procédé d'optimisation de la compression de données d'image en fonction d'au moins un objectif de compression, comprenant :

- une phase d'initialisation, comprenant les étapes de :

  - compression d'une pluralité d'échantillons de test, selon au moins deux conditions de compression distinctes ;

- association à chacun desdits échantillons de test d'au moins une information caractéristique du contenu dudit échantillon et au moins une mesure de résultat de la compression correspondante ;
- établissement d'au moins une fonction de référence, associant au moins un desdits objectifs de compression et/ou au moins une mesure de résultat de compression et/ou au moins une desdites informations caractéristiques, pour chacune desdites conditions de compression ; et

- une phase de sélection, comprenant, pour chaque ensemble de données d'image à compresser, les étapes de :

  - détermination d'au moins une information caractéristique dudit ensemble de données d'image à compresser ;
  - sélection de la condition de compression optimale qui maximise au moins un desdits objectifs de compression, en fonction de ladite ou desdites informations caractéristiques et desdites fonctions de référence.

Ainsi, il est possible d'obtenir une compression adaptative, choisissant automatiquement les conditions de compression optimales, sans que l'utilisateur n'ait à effectuer aucun choix ni paramétrage, si ce n'est l'indication d'un objectif pour la compression à effectuer. Le procédé assure lui-même les choix, en se référant aux fonctions réalisées à partir de tests lors de l'initialisation.

De façon avantageuse, une condition de compression correspond à un algorithme de compression particulier et/ou à une paramétrisation particulière d'un algorithme de compression.

Lesdits algorithmes de compression peuvent notamment appartenir au groupe comprenant:

- les algorithmes basés sur l'utilisation d'une transformation fréquentielle, telle que la DCT ;
- les algorithmes basés sur l'utilisation d'une transformée en ondelettes ;
- les algorithmes basés sur l'utilisation de fractales ou de multi-fractales;
- les algorithmes basés sur l'utilisation d'une quantification vectorielle ;
- les algorithmes basés sur l'utilisation de "quad-trees" (tetra-arbres).

Ladite paramétrisation peut comprendre le réglage d'au moins un des paramètres appartenant au groupe comprenant :

- un taux de compression cible ;
- une erreur de reconstruction, ou un paramètre de qualité, ou une tolérance d'erreur ;
- un nombre minimal et/ou un nombre maximal de subdivisions d'un ensemble de données d'image ;
- les paramètres intrinsèques à un algorithme de compression donné.

Avantageusement, lesdits objectifs de compression appartiennent au groupe comprenant:

- une qualité de reconstruction de l'ensemble de données d'images ;
- une erreur quadratique moyenne ;
- un pourcentage de qualité conservée ;
- un taux de compression ;
- un temps de compression et/ou de décompression ;
- un temps de transmission;
- une taille de fichier compressé ;
- un taux de symétrie de la compression ;

Lesdites mesures de résultat de compression peuvent notamment appartenir au groupe comprenant :

- une mesure de la qualité de reconstruction de l'ensemble de données d'images ;
- le taux de compression.

Ladite mesure de la qualité de reconstruction appartient par exemple au groupe comprenant:

- une mesure de l'erreur quadratique moyenne entre l'ensemble de données d'image source et l'ensemble de données d'image décompressé ;
- une mesure de l'erreur maximum de reconstruction ;
- une mesure du rapport signal-à-bruit ;
- une mesure du rapport signal-à-bruit crête ;
- une mesure de qualité psycho-visuelle.

Par ailleurs, lesdites informations caractéristiques peuvent appartenir au groupe comprenant:

- une mesure de l'entropie de l'ensemble de données d'image;
- une mesure de la complexité de l'ensemble de données d'image;
- une mesure de la puissance fréquentielle de l'ensemble de données d'image;
- une mesure de la texturation de l'ensemble de données d'image.

Selon un mode de réalisation particulier de l'invention, ladite mesure de la complexité est une mesure sur une dimension, répondant à la formule :

$$\frac{1}{nbligne * (nbcol - 1)} \sum_{i=1}^{nbligne} \sum_{j=1}^{nbcol-1} \left| x_{i,j} - x_{i,j+1} \right|$$

Selon un autre mode de réalisation particulier de l'invention, ladite mesure de la complexité est une mesure sur deux dimensions, répondant à la formule :

$$\frac{1}{(nbligne - 1) * (nbcol - 1)} \sum_{i=1}^{nbligne-1} \sum_{j=1}^{nbcol-1} \left| 2x_{i,j} - x_{i,j+1} - x_{i+1,j} \right|$$

Préférentiellement, lesdites fonctions de référence appartiennent au groupe comprenant les fonctions des types suivants :

- mesure(s) de qualité = f(objectif(s) de compression et/ou mesure(s) du résultat de compression et/ou caractéristique(s) de l'image);
- objectif(s) de compression = f(condition(s) de compression et/ou caractéristique(s) de l'image et/ou mesure(s) de qualité).

Ces fonctions de référence peuvent notamment s'exprimer sous au moins une des formes appartenant au groupe comprenant :

- des abaques ;
- des courbes ;
- des tables de valeurs ;
- des fonctions mathématiques ;
- des règles de décision.

De façon avantageuse, lesdites fonctions de référence sont obtenues selon les étapes suivantes :

- analyse des résultats de compression, pour chacune desdits échantillons test et pour chacune desdites conditions de compression ;
- lissage des résultats de ladite analyse.

Lesdits échantillons de test et/ou lesdits ensembles de données d'image peuvent être de tout type, et par exemple :

- des images ;
- des portions ou des zones d'image ;
- des séries d'images similaires ;
- des séquences d'images animées.

De façon préférentielle, ladite étape de sélection tient compte également d'au moins un des critères secondaires appartenant au groupe comprenant :

- la taille ou le format de l'ensemble de données d'image ;
- la luminosité de l'ensemble de données d'image.

Par ailleurs, selon une caractéristique avantageuse de l'invention, le procédé comprend une étape de focalisation, permettant de sélectionner au moins une portion dans une image et/ou au moins une image dans une séquence d'images et/ou une portion identique d'image dans une séquence d'images.

Dans ce cas, deux situations sont envisageables :

- on fixe d'une part au moins un objectif de compression pour la ou lesdites portions d'image et/ou au moins une image dans une séquence d'images et/ou une portion identique d'image dans une séquence d'images, et d'autre part au moins un objectif de compression pour le reste des données d'image ; ou
- on fixe d'une part au moins un objectif de compression pour la ou lesdites portions d'image et/ou au moins une image dans une séquence d'images et/ou une portion identique d'image dans une séquence d'images, et d'autre part pour ledit ensemble des données d'image.

Le procédé de l'invention peut également comprendre une étape de visualisation continue d'un ensemble de données d'image en cours de décompression. On peut alors prévoir que ladite étape de focalisation puisse être mise en oeuvre sur un ensemble de données d'image en cours de décompression.

Avantageusement, ladite pluralité d'échantillons de test est choisie en fonction d'un ou plusieurs types d'ensemble de données d'images et/ou peut être complétée à tout moment.

Selon une autre caractéristique de l'invention, permettant de simplifier son utilisation, ladite phase d'initialisation comprend une étape de définition de paramètres permettant un paramétrage uniforme, associant à l'ensemble desdites conditions de compression les mêmes paramètres de qualité de reconstruction et de taux de compression.

Préférentiellement, ladite phase de sélection comprend une étape de gestion des conflits, en cas d'incompatibilité entre lesdits objectifs de compression et/ou dans le cadre de la mise en oeuvre de ladite étape de focalisation.

Selon un mode de réalisation avantageux de l'invention, le procédé se présente sous la forme d'une boîte à outil logicielle comprenant notamment les outils suivants :

- un outil de sélection mettant en oeuvre ladite étape de sélection ;
- au moins deux algorithmes de compression ;
- un outil de focalisation, mettant en oeuvre ladite étape de focalisation.

D'autres caractéristiques et avantages de l'invention apparaîtront plus clairement à la lecture de la description suivante d'un mode de réalisation préférentiel de l'invention, donné à titre de simple exemple illustratif et non limitatif, et des figures annexées dans lesquelles :

- la figure 1 illustre le principe général de l'invention ;
- la figure 2 présente, sous la forme d'un organigramme simplifié, la phase d'initialisation selon l'invention ;
- la figure 3 présente, sous la forme d'un organigramme simplifié, la phase de sélection selon l'invention ;
- les figures 4 à 6 représentent différentes abaques, du type EQM = f(taux de compression, complexité de l'image), obtenues lors de la phase d'initialisation illustrée en figure 2.

Le mode de réalisation décrit ci-dessous à titre d'exemple concerne la compression d'images fixes. Il est aisé pour l'homme du métier d'adapter cet exemple au cas de la compression d'images animées, ou à des types d'images particuliers (images satellites, médicales, noir et blanc,...).

Comme on l'a déjà indiqué, le but principal de l'invention est de satisfaire d'une manière automatique l'objectif de performance désiré par un utilisateur d'une plate-forme de compression d'images, quelle que soit l'image.

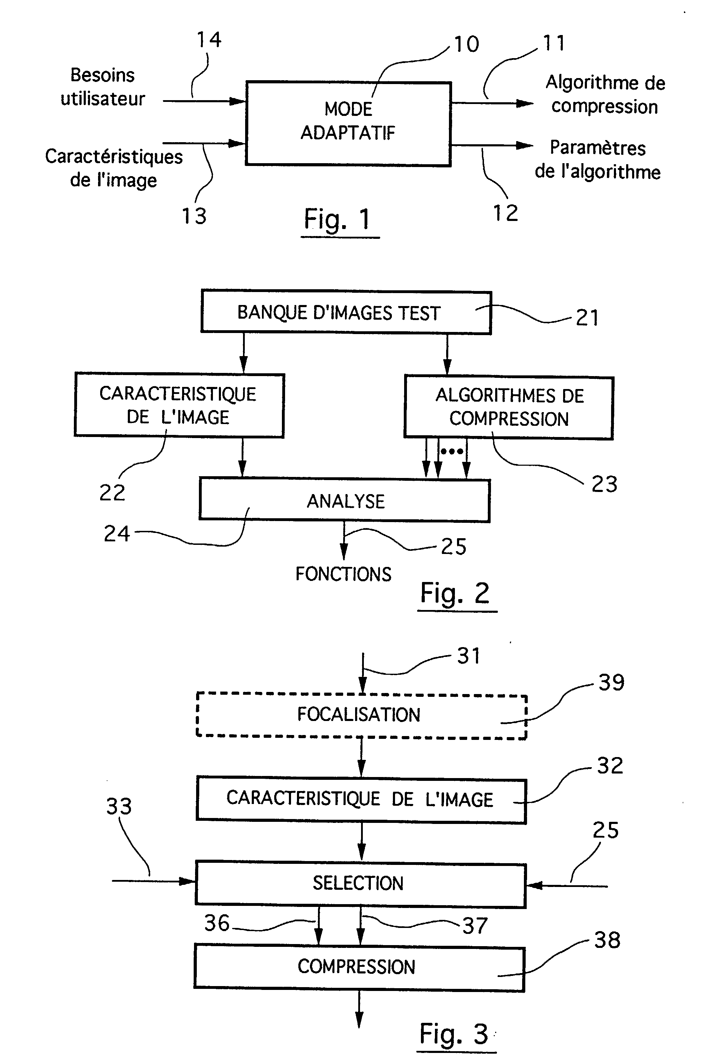

L'approche générale du procédé de l'invention est illustré par la figure 1. Le procédé de l'invention, ou "mode adaptatif", associe un algorithme de compression 11, parmi l'ensemble des algorithmes de compression disponibles, et des paramètres 12 pour cet algorithme, à chaque image 13, ou plus précisément aux caractéristiques de cette image, en fonction des besoins 14 définis par l'utilisateur.

On présente tout d'abord le principe général du procédé de l'invention. Des exemples détaillés des différents aspects sont décrits par la suite.

Le procédé d'optimisation selon l'invention repose sur deux phases distinctes : une phase d'initialisation (illustrée en figure 2) et une phase de sélection (illustrée en figure 3).

La phase d'initialisation a pour but de définir des fonctions permettant d'associer à une image donnée, caractérisée par au moins une information caractéristique (complexité par exemple) et au moins un objectif de compression (par exemple taux de compression ou niveau de qualité), les meilleures conditions de compression, c'est à dire l'algorithme le plus efficace et/ou les meilleurs paramètres pour cet algorithme, et en tenant compte de l'objectif de l'utilisateur.

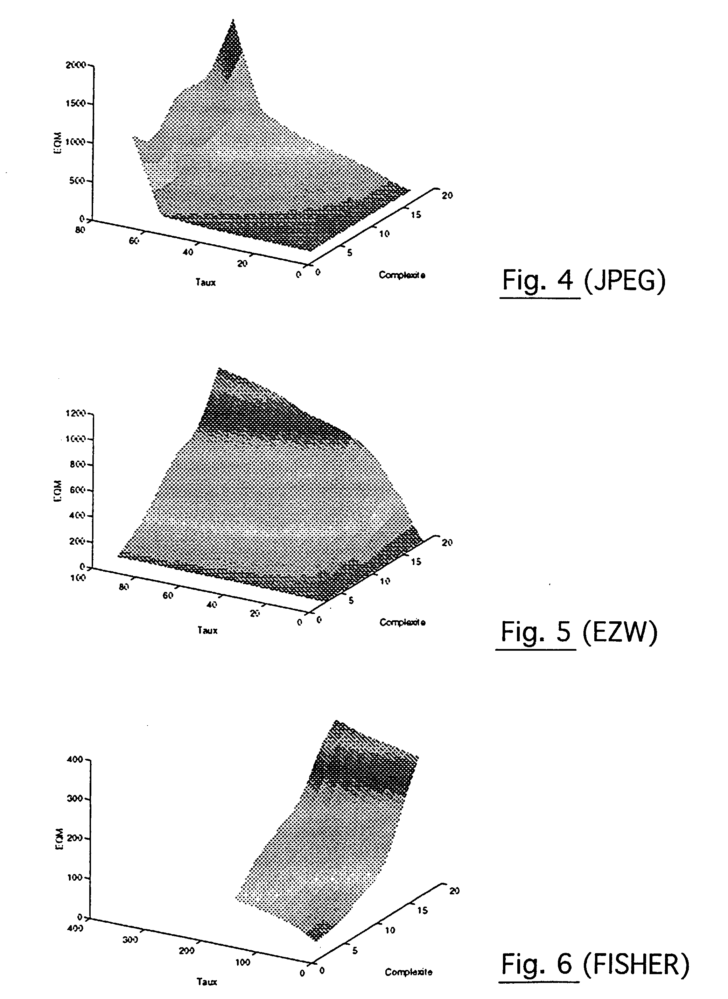

Ces fonctions de sélection peuvent constituer des associations entre les différents paramètres suivants : objectifs de compression, informations caractéristiques de l'image (ou de la portion d'image ou de la séquence d'image) et conditions de compression. Elles peuvent se présenter sous la forme d'abaques, ainsi que cela est illustré par les figures 4 à 6, de tables, de fonctions mathématiques et/ou de règles de décision.

La phase d'initialisation est illustrée par la figure 2. On dispose d'une série d'images test 21 (bien que, par la suite, on parle d'images, on comprend qu'il peut également s'agir de portions d'images ou de séquences d'images, et notamment d'images animées).

Ces images test sont bien sûr choisies de façon à couvrir la plus grande diversité d'images possibles (adaptées le cas échéant à une application précise). A chacune de ces images on associe 22 une ou plusieurs informations caractéristiques, toile qu'une information de complexité. Parallèlement on effectue la compression 23 de chacune de ces images test avec l'ensemble des algorithmes disponibles, et le cas échéant selon plusieurs configurations de paramétrisation.

Enfin, on analyse 24 les résultats de compression (taux de compression et/ou qualité de reconstruction de l'image) de façon à produire les fonctions de référence 25 qui permettront la sélection des conditions de compression optimales dans la phase de sélection.

Cette phase de sélection est illustrée en figure 3. A chaque image à compresser 31, on associe une ou plusieurs informations caractéristiques, de façon similaire à l'étape 22 déjà discutée.

Ensuite, en fonction de l'objectif 33 fixé par l'utilisateur, ou pré-déterminé, des caractéristiques 34 de l'image, et des fonctions de référence 25, on effectue la sélection 35 des conditions de compression qui désignent d'une part un algorithme de compression 36 et d'autre part, le cas échéant, des paramètres 37 pour cet algorithme.

L'image est alors compressée 38, dans les conditions optimales, sans que l'utilisateur ait eu besoin de fixer lui-même les conditions de compression.

On présente maintenant plus en détail les outils utilisés (paragraphe 1), la phase d'initialisation (paragraphe 2) et la phase de sélection (paragraphe 3), dans le mode de réalisation préférentiel, ainsi que divers aspects complémentaires (paragraphe 4).

### 1. Outils utilisés

### 1.1 Algorithmes de compression

Comme déjà indiqué, on connaît plusieurs grandes familles d'algorithmes, respectivement basées Sur la DCT, la transformée en ondelettes, les fractales IFS, la quantification vectorielle et les «quad-trees".

Dans le mode de réalisation décrit ci-dessous, on utilise un algorithme (appelé JPEG par la suite) basé sur la DCT, un algorithme (appelé EZW ou SHAPIRO par la suite) basé sur les ondelettes et un algorithme (appelé FISHER par la suite) basé sur les fractales.

### 1.1.1 algorithme JPEG

JPEG (initiales de "Joint Photographic Expert Group") désigne les algorithmes de compression normalisés décrits dans ISO/IEC 10918-1.

Le JPEG utilisé correspond au "mode séquentiel basé DCT, baseline Huffman" de la norme, qui est un algorithme de compression avec pertes. Le principe général de l'algorithme de compression JPEG avec perte est le suivant :

- prendre le prochain bloc de 8x8 pixels, calculer la transformée en cosinus discret (Discrete Cosine Transform, DCT) de ce bloc,
- diviser chacun des 8x8 coefficients obtenus par une valeur spécifique (la table donnant la valeur pour chaque fréquence est appelée la table de quantification), et arrondir le résultat à l'entier le plus proche,
- appliquer un codage entropique (qui consiste essentiellement à mettre les coefficients quantifiés en ordre "zig-zag", puis Run Length Encoding (RLE), puis soit Huffman, soit codage arithmétique).

### 1.1.2 algorithme SHAPIRO (EZW)

Nous désignons sous le nom de SHAPIRO un autre algorithme de compression d'images basé sur la transformation en ondelettes, et qui a été inventé et décrit par J. M. Shapiro.

L'algorithme SHAPIRO pousse le filtrage par la transformée en ondelettes jusqu'au dernier niveau (pour lequel il ne reste qu'un coefficient égal au résultat de la convolution successive de l'image avec le filtre passe-bas, ce qui est généralement proche de la moyenne de l'image). Mais l'originalité essentielle de l'algorithme de Shapiro réside dans l'organisation et le codage des coefficients obtenus :

- l'ordre de codage des coefficients est par magnitude décroissante, c'est-à-dire que les coefficients les plus importants seront codés en premier, indépendamment de la fréquence à laquelle ils correspondent ;
- pour finir, les suites de symboles (correspondant a "positif", "négatif", "racine de branche négligeable" et "zéro isolé") subissent un codage entropique "au fil de l'eau" de type codage arithmétique adaptatif.

### 1.1.3 algorithme FISHER

Nous désignons sous le nom de FISHER un algorithme fractal de compression d'images de type Iterated Function System (IFS), qui a été décrit par Y. Fisher.

Le principe général des algorithmes IFS est la recherche d'auto-similarités dans l'image pour en déduire une transformation dont l'itération converge vers un point fixe aussi proche que possible de l'image d'origine.

Concrètement les étapes de la compression par IFS sont les suivantes :

- choisir une partition "non-recouvrante" de l'image (un ensemble de régions dont toutes les intersections 2 à 2 sont vides, mais dont la réunion constitue l'image entière);
- pour chaque région de la partition, recherche dans l'image un "domaine" plus grand et une transformation contractante telle que la transformée du domaine soit le plus similaire possible à la région ;
- coder "astucieusement" les paramètres des transformations, et leur appliquer éventuellement un codage entropique.

La taille des données compressées obtenues par IFS est égale au nombre de régions dans la partition, multiplié par le nombre de bits nécessaires pour coder les paramètres de chaque couple (domaine, transformation), et éventuellement divisé par le taux de compression obtenu par une phase finale de codage entropique.

### 1.1.4 autres algorithmes

De nombreux autres algorithmes peuvent être utilisés, tels que l'algorithme TETRA, basé sur le codage d'image en "quad-tree", l'algorithme EPIC ("Efficient Pyramid image Coder"), basé sur la transformation en ondelettes, les algorithmes sans perte, ...

### 1.2 Mesure de la qualité de reconstruction

Plusieurs critères peuvent être envisagés, pour mesurer la qualité de reconstruction, éventuellement pris en combinaison :

### 1.2.1 Erreur Quadratique Moyenne (EQM)

L'erreur quadratique moyenne entre l'image source et l'image reconstruite est une mesure d'erreur statistique donnée par la formule suivante :

$$\frac{1}{(nbligne)*(nbcol)} \sum_{i=1}^{nbligne} \sum_{j=1}^{nbcol} (x_{i,j} - \tilde{x}_{i,j})^2$$

Cette erreur traduit la puissance d'erreur entre les images source et décompressée. La minimisation de l'EQM est un critère qui est à la base de nombreux algorithmes de compression. Cependant, l'EQM peut être pauvre en indication sur la qualité subjective de reconstruction, ne tenant pas compte de la réaction de l'oeil à l'apparence visuelle des défauts. Cela dit, en général, une image avec une forte EQM a plus de distorsion qu'avec une EQM plus faible.

De plus l'EQM a une relative stabilité numérique qui la rend intéressante dans le cas de comparaisons de performance, pour suivre l'évolution de l'erreur en fonction d'autres facteurs.

### 1.2.2 critères psycho-visuels (IQM)

L'IQM est une approche de mesure psycho-visuelle de la distorsion des images. On mesure idéalement la qualité d'un système de codage par la qualité subjective de l'image reconstruite lors de l'opération de décodage. Malheureusement, il n'existe pas aujourd'hui de mesure universelle de qualité. En effet, d'une part cette qualité dépend de l'application, d'autre part elle doit prendre en compte les propriétés encore imprécises du récepteur visuel humain.

On retiendra cependant l'échelle de qualité utilisée pour l'imagerie professionnelle en télévision. Cette échelle est quantifiée en 5 niveaux de visibilité de dégradations :

1 : imperceptible,
2 : perceptible non gênant,
3 : légèrement gênant,
4: gênant,
5 : très gênant.

La démarche suivie consiste à faire analyser psychovisuellement les images originales, puis les images reconstruites, par des non-spécialistes. La distance d'observation varie entre 4 et 6 fois la hauteur de l'écran (4H ou 6H). Une technique de codage est jugée satisfaisante pour une note moyenne de 4,5 à 6H.

Il est recommandé de procéder de la manière suivante : le premier travail consiste à choisir des images tests bien spécifiques de l'application en accord avec des experts opérationnels. On valide ensuite les résultats du point de vue subjectif avec des non-spécialistes, puis des experts.

De nombreux chercheurs ont tenté d'établir un modèle de mesure psycho-visuelle. Nous avons choisi l'IQM comme étant le plus complet et le plus corrélé à l'impression visuelle, d'après de tests faits par les auteurs et confirmés par nos essais.

Cette mesure a initialement été développée pour des applications d'images aériennes, et dans le but de qualifier de manière absolue la qualité d'une image, pour savoir si elle était utilisable ou non. Nous avons donc adapté cette mesure pour l'appliquer au calcul de reconstruction entre une image initiale et une image reconstruite après compression-décompression.

La réalisation d'une telle fonction permet de disposer d'une mesure qui rend mieux compte de la perception de la dégradation par l'oeil humain. Elle ne donne cependant pas de relation entre les valeurs de cette mesure et l'échelle perceptuelle donnée plus haut. L'établissement de cette relation est à faire dans la suite du travail sur le mode adaptatif. Cela dit, cette difficulté peut être contournée, car dans la majorité des cas la spécification de critères de qualité dans le cadre d'une compression se fera dans le cadre de la focalisation, et concernera la qualité de certaines zones de l'image par rapport à d'autres. On pourra ainsi utiliser les valeurs relatives des IQM des différentes zones sans les relier de manière absolue avec l'échelle perceptuelle mentionnée.

### 1.2.3 autres critères

Il existe d'autres mesures statistiques utilisables, assez proches ou dérivées de l'EQM, comme l'erreur maximum de reconstruction, le rapport signal à bruit (Signal-to-Noise Ratio) ou le rapport signal à bruit "crête" (Peak Signal-to-noise Ratio), ...

### 1.3 Caractérisation de l'image

### 1.3.1 complexité 1D

Cette grandeur est l'estimation de complexité utilisée notamment dans le cadre du système de régulation de l'algorithme SPOT5, basé sur JPEG.

Cette complexité est la moyenne des différences de chaque pixel avec son voisin immédiat à gauche. Malgré son peu de sophistication, ce critère rend bien compte de la régularité locale, et donc dans une certaine mesure de la texturation, d'une image.

La formule permettant d'obtenir la complexité d'une image est la suivante :

$$\frac{1}{nbligne * (nbcol - 1)} \sum_{i=1}^{nbligne} \sum_{j=1}^{nbcol-1} |x_{i,j} - x_{i,j+1}|$$

### 1.3.2 complexité 2D

Le critère de complexité exposé ci-dessus est celui que nous avons identifié comme le plus fiable lors des expérimentations préliminaires. Cette fiabilité se reflète dans la précision des abaques utilisées pour les compressions utilisant JPEG.

Il reste que comme nous l'avons dit ce critère est relativement rudimentaire, et notamment ne prend en compte les différences entre les pixels que dans la seule direction horizontale.

Il serait donc souhaitable de considérer un critère semblable mais bidirectionnel, par exemple :

$$\frac{1}{(nbligne - 1) * (nbcol - 1)} \sum_{i=1}^{nbligne-1} \sum_{j=1}^{nbcol-1} |2x_{i,j} - x_{i,j+1} - x_{i+1,j}|$$

### 1.3.3 entropie

L'entropie d'un fichier, telle qu'elle est donnée par la formule qui suit, est le nombre de bits nécessaires pour représenter le fichier.

$$H = \sum_{i=0}^{255} p_i \log_2(p_i)$$

Alors que le nombre de bits utilisé pour stocker informatiquement un fichier est systématiquement de 8 bits par caractère, on peut en principe réduire ce nombre de bits à celui indiqué par l'entropie. C'est l'objectif des codages entropiques tels que le codage de Huffman.

D'un point de vue plus proche de l'image, une faible entropie est caractéristique du fait que les pixels prennent un faible nombre de valeurs dans l'intervalle [0,255]. Ceci est en principe représentatif de l'information contenue dans l'image et de la difficulté qu'on aura à la comprimer, dans la mesure où si les pixels prennent un petit nombre de valeurs, les variations d'intensité devraient être peu fréquentes.

En pratique ce n'est pas forcément vrai (on peut avoir une image n'utilisant que deux valeurs de pixels, mais présentes alternativement ; cette image sera plus difficile à coder qu'une image contenant plus de valeurs de pixels, concentrées dans des zones uniformes).

### 1.3.4 puissance fréquentielle

La puissance fréquentielle est la valeur moyenne du spectre de puissance de l'image. Le spectre de puissance est lui-même défini comme le module de la transformée de Fourier de l'image :

$$|F(u, v)| = [R^2(u, v) + I^2(u, v)]^{1/2}$$

où la transformée de Fourier de l'image

$$|F(u,v)| = \mathbf{F}\{f(x,y)\} = \int_{x\,\min}^{x\,\max} \int_{y\,\min}^{y\,\max} f(x,y)e^{-j2\pi ux}e^{-j2\pi vy}dx\,dy$$

est représentée sous sa forme module/phase :     $F(u,v) = R(u,v) + jI(u,v)$.

### 1.3.5 autres critères

On peut également envisager l'utilisation de :

- critères utilisant la DCT : il peut également être intéressant de considérer un critère utilisant la représentation fréquentielle de l'image pour évaluer son contenu. Un tel critère peut être construit à l'aide d'une DCT par blocs, ce qui rendrait ses valeurs particulièrement propres à évaluer la facilité à comprimer l'image à l'aide de JPEG ;
- critères utilisant la transformée en ondelettes : il peut également être intéressant de considérer un critère utilisant la transformée en ondelettes, par exemple en calculant l'entropie des coefficients en ondelettes résultant de la transformée de l'image.

Un tel critère serait a priori propre à rendre compte de la facilité que l'on aurait à comprimer l'image avec un algorithme utilisant les ondelettes.

## 2 Phase d'initialisation :

### 2.1 Principe

Comme indiqué plus haut, l'invention repose sur l'utilisation d'abaques (ou règles, ou fonctions, ou tables,...) réalisées à partir d'une analyse des résultats de compressions sur un ensemble d'images test.

### 2.2 Images test

On utilise, dans l'exemple discuté, une base de 50 images, divisée en trois catégories :

- images naturelles : images de scènes quotidiennes telles que visages, animaux, paysages ;
- images aériennes : prises de vues aériennes prises dans des conditions opérationnelles, avec des résolutions différentes, comprenant de photos de zones industrielles, résidentielles ou portuaires;
- images satellitaires : images SPOT couvrant des zones urbaines, agricoles et montagneuses.

### 2.3 Réalisation des abaques

### 2.3.1 principe

Chacune de ces images est compressée à l'aide de tous les algorithmes. En fonction des résultats de compression, on génère des abaques du type:

mesure(s) de qualité = f(objectif(s) de compression et/ou mesure(s) du résultat de compression et/ou caractéristique(s) de l'image)
objectif(s) de compression = f(condition(s) de compression et/ou caractéristique(s) de l'image et/ou mesure(s) de qualité).

Le principe est donc d'étudier les variations de l'erreur de reconstruction (EQM ou IQM) en fonction du taux atteint d'une part, et du critère statistique d'autre part.
Le critère statistique varie quand on parcourt la base des images d'essai. On peut alors voir si l'évolution de l'erreur en fonction du critère à taux constant ne suit aucune loi particulière, ou au contraire présente une monotonie et une régularité que l'on peut interpréter et utiliser pour piloter le mode adaptatif.
Ces courbes peuvent être directement utilisées en tant que données numériques pour prédire le comportement d'un algorithme donné sur une image donnée.
Dans la mesure où elles sont déjà suffisamment régulières, ces courbes peuvent être lissées, par exemple à l'aide de fonctions splines, pour s'affranchir des variations ducs à la base de test utilisée.

Ces courbes permettent de plus de déterminer, pour une image donnée, l'algorithme sensé être le meilleur sur la base de la valeur du ou des critères statistiques utilisés.

### 2.3.2 exemples

On peut, à titre d'exemple non limitatif, tenir compte d'un ou plusieurs des abaques suivants :

- erreur quadratique moyenne = f(taux de compression, complexité de l'ensemble de données d'image) ;
- erreur quadratique moyenne = f(taux de compression, entropie de l'ensemble de données d'image) ;
- erreur quadratique moyenne = f(taux de compression, puissance fréquentielle de l'ensemble de données d'image) ;
- qualité psycho-visuelle = f(taux de compression, complexité de l'ensemble de données d'image) ;
- erreur quadratique moyenne = f(taux de compression, taille de l'ensemble de données d'image) ;
- erreur quadratique moyenne = f(taux de compression, luminosité de l'ensemble de données d'image) ;
- taux de compression = f(paramètre de l'algorithme de compression, complexité de l'ensemble de données d'image) ;
- erreur quadratique moyenne = f(paramètre de l'algorithme de compression, complexité de l'ensemble de données d'image) ;
- taux de compression = f(complexité de l'ensemble de données d'image) ;
- taux de compression = f(entropie de l'ensemble de données d'image) ;
- ...

On notera que les deux derniers exemples concernent les algorithmes de compression sans perte, pour lesquels la seule problématique est de prédire le taux de compression que l'on va obtenir, pour une image donnée.

Les figures 4 à 6 donnent des exemples de tels abaques, après lissage. Il s'agit de courbes du type EQM = f(taux de compression, complexité de l'image).

### 3. **Phase de sélection**

### 3.1 Besoins et utilisations

### 3.1.1 exemple : 9 modes de paramétrage

Le mode adaptatif contient, dans l'exemple décrit, neuf modes de paramétrage correspondant à des objectifs de compression possibles pour un utilisateur.

Ces objectifs peuvent en fait se classer en trois catégories :

1. précision directe de l'algorithme et de son ou ses paramètres : cet objectif ne concerne que les gens ayant suffisamment de connaissances sur l'algorithme pour vouloir l'utiliser directement. Ce type de paramétrage doit rester disponible, mais n'est évidemment pas le plus intéressant de ceux que peut offrir un mode adaptatif ;

2. précision d'un paramètre pouvant être ramené à un taux : il s'agit de paramètres qui précisent de manière plus ou moins directe la taille du fichier obtenu après compression, que ce soit au travers de cette taille, du taux en tant que rapport ou "bit-rate", d'une temps de transmission à un débit donné, etc.

3. précision d'un paramètre pouvant être ramené à une erreur de reconstruction : il s'agit de paramètres qui précisent de manière plus ou moins directe l'erreur entre l'image originale et l'image résultant de la compression. Il peut s'agir d'un mot clé précisant la qualité à conserver, d'une mesure d'erreur numérique à atteindre, etc.

Les possibilités de paramétrage données à l'utilisateur sont listées ci-après. Cependant, l'addition d'une possibilité supplémentaire adaptée à un besoin spécifique reste toujours possible et simple a priori, seule la traduction de ce paramètre en un taux ou une erreur cibles étant en principe à réaliser.

- Précision d'un algorithme: A1 Algorithme et paramètre: l'algorithme est un de ceux disponibles, et la signification et le domaine de définition du paramètre lui sont reliés.
- Précision d'un taux ou équivalent ;

T1 taux de compression : le taux de compression est le rapport entre la taille de l'image originale et celle du fichier issu de la compression. Ce nombre doit être supérieur à 1.

T2 taille du fichier comprimé : c'est la taille du fichier en sortie de l'algorithme de compression. Cette taille doit être strictement inférieure à la taille de l'image originale. Cette taille est par exemple donnée en octets.

T3 temps de transmission : c'est le temps mis pour transférer l'image à travers un réseau. Ce temps n'a de sens qu'associé au débit du réseau.

Ces deux nombres doivent être supérieurs à 0. Par exemple, le temps est précisé en secondes et le débit en bits par secondes, ce qui correspond aux conventions habituellement adoptées lors de l'utilisation de réseaux.

- Précision d'une erreur de reconstruction ou équivalent :

Q1 EQM cible : c'est l'Erreur Quadratique Moyenne que l'on doit trouver entre l'image originale et l'image reconstruite. C'est un nombre réel supérieur à 0.

Q2 Qualité de reconstruction : il s'agit de la précision de la qualité de l'image obtenue après compression et décompression, exprimée à l'aide de mots-clés. Ces mots-clés sont les suivants :

- parfaite,
- excellente,
- bonne,
- passable,
- médiocre.

Q3 Pourcentage de qualité conservée : il s'agit d'un pourcentage permettant de faire varier uniformément la qualité restituée (et donc d'une manière continue contrairement aux mots-clés ci-dessus) entre 100 % (qualité impeccable) et 0 % (dégradation maximale de l'image).

On peut de plus associer aux paramétrages T1, T2, T3, Q1, Q2 et Q3 l'exigence d'un algorithme avec lequel devra être atteint l'objectif spécifié. Dans la mesure où grâce au paramétrage uniforme, on sait atteindre un taux ou une erreur cible avec n'importe quel algorithme, ceci ne pose pas de problème particulier. Dans ce cas on ne précise naturellement pas le paramètre natif de l'algorithme.

De plus, dans le cadre du mode de réalisation décrit, la précision d'un de ces objectifs entraîne la mise à jour de tous les autres champs pour maintenir la cohérence du paramétrage dans les différents éléments de l'interface. Cette mise à jour s'effectue:

- entre les paramètres de même nature (T1 à T2, etc) ;
- entre des paramètres de natures différentes (A1 à T1, T1 à Q1, etc), en utilisant les abaques pour évaluer soit le taux de l'EQM obtenue avec un algorithme donné et son paramètre, soit le taux obtenu pour l'EQM précisée ou réciproquement.

3.1.2 compromis automatique

En plus de ces scénarios d'utilisations, il est intéressant de disposer d'un mode de paramétrage dans lequel l'utilisateur ne donne pas d'objectif particulier, et pour lequel le mode adaptatif devra lui-même trouver le meilleur compromis entre taux de compression et qualité de restitution.

Ce compromis peut résider dans:

- la sélection du procédé permettant d'obtenir le meilleur taux de compression pour une qualité de restitution jugée satisfaisante (par exemple correspondant aux critères "excellente" ou "bonne" mentionnés ci-dessus) ;
- la sélection du procédé permettant d'obtenir le meilleur rapport (taux obtenu)/{EQM obtenu}, par une optimisation globale effectuée en décrivant les courbes pour tous les algorithmes et les paramétrages possibles.

3.1.3 gestion des conflits

Les conflits de paramétrage possibles sont de deux types:

- association de paramètres incompatibles par exemple, précision d'un taux et d'une qualité à atteindre pour la compression d'une image donné ;
- dans le cadre de la focalisation (technique décrite par la suite), incompatibilité des paramètres entre les zones et le fond de l'image (typiquement, lorsque le volume de données correspondant aux zones compressées ne permet plus d'atteindre un certain taux pour la totalité de l'image).

3.2 Choix des conditions de compression optimale

3.2.1 réduction des paramètres utilisateurs

Avant de choisir la méthode de compression à proprement parler, il est nécessaire de passer des objectifs de l'utilisateur aux deux paramètres sous-jacents que l'on sait gérer à l'aide des abaques, à savoir un taux de compression ou une erreur de reconstruction exprimée sous la forme d'une EQM.

On effectue donc les conversions suivantes :

- A1 Algorithme et paramètre : aucune transition n'est à faire, l'objectif est directement utilisable comme paramétrage.
- T1 Taux de compression : aucune transition n'est à faire, l'objectif est directement utilisable comme paramétrage.
- T2 Taille du fichier comprimé : selon les algorithmes, le nombre d'octets à atteindre pour le fichier comprimé peut directement être utilisé comme paramètre (par exemple pour EZW).
- T3 Temps de transmission : à partir d'un temps de transmission t en secondes sur un réseau et du débit D en bits par seconde de ce réseau, on peut déduire le taux cible Tx à atteindre pour une image dont on connaît la taille originale en octets.
- Q1 EQM Cible : aucune transition n'est à faire, l'objectif est directement utilisable comme paramétrage.
- Q2 Qualité de reconstruction : les cinq mots-clés ci-dessous ont été choisis en s'inspirant de ce qui est habituellement rencontré dans la littérature, et de manière à ce que chacun corresponde à une étape dans la perception de la qualité d'une image :

    - parfaite : aucune perte subie durant la compression. Implique l'utilisation d'une compression sans perte.
    - excellente : pas de dégradations visibles dans l'image. Il peut y avoir des erreurs identifiables par des mesures numériques telles que l'EQM, mais un observateur humain observant l'image à ses tailles et résolutions originales ne doit pas les voir.
    - bonne : un utilisateur observant l'image avec attention peut distinguer des distorsions, mais celles-ci doivent rester discrètes et non gênantes.
    - passable : on peut observer des dégradations nettement visibles, sans avoir à regarder l'image avec attention. La scène doit rester reconnaissable.
    - médiocre : la scène est dégradée dans son ensemble, et n'est pas forcément reconnaissable. Seule la forme générale subsiste, pouvant éventuellement servir de fond pour indiquer le contexte dans le cadre de la focalisation.

- Q3 Pourcentage de qualité conservée : il est utile de pouvoir indiquer la qualité de restitution que l'on désire sous la forme d'un pourcentage.

3.2.2 choix de l'algorithme

Une fois les objectifs de l'utilisateur ramenés à l'obtention d'un taux ou d'une EQM cible, l'algorithme à utiliser est déterminé en trouvant, pour l'image :

- si un taux est visé, l'algorithme qui donne l'EQM la plus basse pour une image de la complexité de l'image en entrée ;
- si une EQM est visée, l'algorithme qui donne le taux le plus important pour une image de la complexité de l'image en entrée ; ou
- si une optimisation globale est demandée, l'algorithme qui donne le meilleur taux pour une qualité estimée acceptable à définir, ou qui donne le meilleur rapport {taux obtenu}/{EQM obtenue}.

La prédiction de l'EQM obtenue à un taux donné, ou du taux associé à l'EQM visée pour l'image courante, se fait en utilisant les abaques :

$$EQM = f(taux, complexité)$$

élaborées pour chaque algorithme, telles qu'illustrées par les figures 4 à 6 :

- si un taux est visé, on cherche l'EQM correspondant aux coordonnées (taux, complexité) sur la courbe ;

- si une EQM est visée, on cherche la valeur du taux auquel il faut comprimer une image dont la complexité est celle de l'image en entrée, pour obtenir cette EQM.

Ces abaques ont été élaborées à partir des expérimentations indiquées plus haut, puis lissées à l'aide de fonctions splines.

Pour les algorithmes utilisant un paramètre propre différent du taux et de l'EQM (JPEG, FISHER, SHAPIRO), il existe une méthode alternative utilisant d'autres abaques pour recouper les résultats ou prendre la méthode qui donne les estimations les plus précises. On utilise dans ce cas :

$$taux = f(paramètre, complexité)$$

et

$$EQM = f(paramètre, complexité)$$

Pour connaître l'EQM correspondant à un taux désiré pour une image de complexité donnée, on commence par trouver, à l'aide de la première abaque, le paramètre propre de l'algorithme qu'il faut utiliser pour obtenir ce taux. Puis, à l'aide de la deuxième abaque, on trouve l'EQM obtenue avec ce paramètre.

On procède de manière analogue pour trouver le taux correspondant à une EQM désirée, en utilisant successivement la deuxième puis la première abaque.

### 4. compléments

#### 4.1 optimisation des abaques

Les données expérimentales sur lesquelles sont basées les résultats décrits ci-dessus, essentiellement sous la forme des abaques utilisées, ont été réalisées et intégrées d'une manière manuelle.

De plus, les abaques ont été déterminées à partir d'une base de 50 images, et les critères de qualité à partir de tests visuels effectués avec 10 images ; ceci correspond à la volonté d'aboutir à un prototype validant le principe du mode adaptatif et pouvant servir de plate-forme de démonstration, mais est insuffisant pour permettre une utilisation robuste en milieu opérationnel.

Une évolution de l'ensemble du système suppose donc de lui intégrer le processus d'élaboration et de mise à jour de ces données, pour pouvoir :

- mettre à jour les abaques avec des versions améliorées, résultant de nouvelle expérimentation ou de manipulations ad hoc de leur contenu. Ces améliorations et mises à jour doivent pouvoir être faites aussi bien par les concepteurs du système que par des utilisateurs, en particulier pour permettre à des utilisateurs de réaliser des abaques caractéristiques d'images spécifiques à leurs besoins et dont ils disposent d'un grand nombre d'échantillons ;
- ajouter ou modifier des méthodes de réduction de paramètres utilisateurs (paramètres réseau, critères de qualité, etc), pour s'adapter à des contextes d'utilisation particuliers.

#### 4.2 focalisation

Avantageusement, la phase de sélection peut coopérer avec une étape de focalisation 39 (figure 3), qui peut se présenter comme un "outil" indépendant. La focalisation selon l'invention consiste à sélectionner une ou plusieurs zones préférées dans une image, ou dans une séquence d'images, et à requérir un traitement amélioré pour ces zones (ou inversement, un traitement dégradé pour le reste des images).

Cela permet par exemple, pour une taille de fichier donnée, d'obtenir une très bonne qualité d'image pour la zone en question. Il peut par exemple s'agir d'un élément particulier par rapport au fond de l'image, ou du visage (ou seulement de la bouche) d'une personne qui parle dans une application de visiophonie.

On peut prévoir deux stratégies de définition des objectifs :

- on fixe d'une part au moins un objectif de compression pour la ou lesdites portions d'image et/ou au moins une image dans une séquence d'images et/ou une portion identique d'image dans une séquence d'images, et d'autre part au moins un objectif de compression pour le reste des données d'image ; ou
- on fixe d'une part au moins un objectif de compression pour la ou lesdites portions d'image et/ou au moins une image dans une séquence d'images et/ou une portion identique d'image dans une séquence d'images, et d'autre part pour ledit ensemble des données d'image.

Le procédé comprend par ailleurs avantageusement une visualisation continue des images en cours de décompression, avec une netteté augmentant au fur et à mesure de la compression. Dans ce cas, la technique de focalisation peut permettre également la sélection d'une zone sur l'image en cours de décompression. Seule cette zone sera alors délivrée avec une qualité améliorée.

4.3 prise en compte d'autres informations

Outre les différents aspects déjà envisagés, on peut également optimiser les opérations de sélection des conditions de compression en tenant compte de différents paramètres annexes qui sont pertinents vis-à-vis de l'efficacité d'au moins certains des algorithmes, tels que la taille et le format de l'image, la luminosité de l'image, etc...
On peut également prendre en compte des aspects tels que les temps de compression et de décompression (et le rapport de ces temps) et la robustesse vis-à-vis des erreurs de transmission.

4.4 amélioration de la précision des prédictions

Pour améliorer encore la précision des prédictions, il est possible d'améliorer les performances des abaques, en les modifiant par différents traitements tels que :

- des prolongements par continuité ;
- l'addition d'une constante positive ou négative, pour favoriser ou défavoriser un algorithme particulier.

4.5 boîte à outils

Le procédé de l'invention peut être mis en oeuvre sous la forme d'une boîte à outils, qui comprend des éléments logiciels indépendants pouvant coopérer, et notamment :

- un outil de sélection (les fonctions de référence peuvent être prédéfinies, adaptées aux besoins de l'utilisateur et/ou réalisables par l'utilisateur, avec sa propre banque d'images test) ;
- plusieurs algorithmes de compression (le choix des algorithmes peut être adaptés aux besoins de l'utilisateur) ;
- un outil de focalisation ;
- un outil de visualisation continue ;
- ...

**Revendications**

1. Procédé d'optimisation de la compression de données d'image en fonction d'au moins un objectif de compression, caractérisé en ce qu'il comprend :

- une phase d'initialisation, comprenant les étapes de :

  - compression d'une pluralité d'échantillons de test, selon au moins deux conditions de compression distinctes ;
  - association à chacun desdits échantillons de test d'au moins une information caractéristique du contenu dudit échantillon et au moins une mesure de résultat de la compression correspondante ;
  - établissement d'au moins une fonction de référence, associant au moins un desdits objectifs de compression et/ou au moins une mesure de résultat de compression et/ou au moins une desdites informations caractéristiques, pour chacune desdites conditions de compression ; et

- une phase de sélection, comprenant, pour chaque ensemble de données d'image à compresser, les étapes de :

  - détermination d'au moins une information caractéristique dudit ensemble de données d'image à compresser ;
  - sélection de la condition de compression optimale qui maximise au moins un desdits objectifs de compression, en fonction de ladite ou desdites informations caractéristiques et desdites fonctions de référence.

2. Procédé selon la revendication 1, caractérisé en ce qu'une condition de compression correspond à un algorithme de compression particulier et/ou à une paramétrisation particulière d'un algorithme de compression.

3. Procédé selon la revendication 2, caractérisé en ce que lesdits algorithmes de compression appartiennent au groupe comprenant:

    - les algorithmes basés sur l'utilisation d'une transformation fréquentielle, telle que la DCT ;
    - les algorithmes basés sur l'utilisation d'une transformée en ondelettes ;
    - les algorithmes basés sur l'utilisation de fractales ou de multi-fractales :
    - les algorithmes basés sur l'utilisation d'une quantification vectorielle ;
    - les algorithmes basés sur l'utilisation de "quad-trees" (tetra-arbres).

4. Procédé selon l'une quelconque des revendications 2 et 3, caractérisé en ce que ladite paramétrisation comprend le réglage d'au moins un des paramètres appartenant au groupe comprenant :

    - un taux de compression cible ;
    - une erreur de reconstruction, ou un paramètre de qualité, ou une tolérance d'erreur ;
    - un nombre minimal et/ou un nombre maximal de subdivisions d'un ensemble de données d'image ;
    - les paramètres intrinsèques à un algorithme de compression donné.

5. Procédé selon l'une quelconque des revendications 1 à 4, caractérisé en ce que lesdits objectifs de compression appartiennent au groupe comprenant :

    - une qualité de reconstruction de l'ensemble de données d'images ;
    - une erreur quadratique moyenne ;
    - un pourcentage de qualité conservée ;
    - un taux de compression ;
    - un temps de compression et/ou de décompression ;
    - un temps de transmission ;
    - une taille de fichier compressé ;
    - un taux de symétrie de la compression ;

6. Procédé selon l'une quelconque des revendications 1 à 5, caractérisé en ce que lesdites mesures de résultat de compression appartiennent au groupe comprenant :

    - une mesure de la qualité de reconstruction de l'ensemble de données d'images ;
    - le taux de compression.

7. Procédé selon la revendication 6, caractérisé en ce que ladite mesure de la qualité de reconstruction appartient au groupe comprenant :

    - une mesure de l'erreur quadratique moyenne entre l'ensemble de données d'image source et l'ensemble de données d'image décompressé ;
    - une mesure de l'erreur maximum de reconstruction ;
    - une mesure du rapport signal-à-bruit ;
    - une mesure du rapport signal-à-bruit crête ;
    - une mesure de qualité psycho-visuelle.

8. Procédé selon l'une quelconque des revendications 1 à 7, caractérisé en ce que lesdites informations caractéristiques appartiennent au groupe comprenant :

    - une mesure de l'entropie de l'ensemble de données d'image ;
    - une mesure de la complexité de l'ensemble de données d'image ;
    - une mesure de la puissance fréquentielle de l'ensemble de données d'image ;
    - une mesure de la texturation de l'ensemble de données d'image.

9. Procédé selon la revendication 8, caractérisé en ce que ladite mesure de la complexité est une mesure sur une dimension, répondant à la formule :

$$\frac{1}{nbligne * (nbcol-1)} \sum_{i=1}^{nbligne} \sum_{j=1}^{nbcol-1} \left| x_{i,j} - x_{i,j+1} \right|$$

10. Procédé selon la revendication 8, caractérisé en ce que ladite mesure de la complexité est une mesure sur deux dimensions, répondant à la formule :

$$\frac{1}{(nbligne-1) * (nbcol-1)} \sum_{i=1}^{nbligne-1} \sum_{j=1}^{nbcol-1} \left| 2x_{i,j} - x_{i,j+1} - x_{i+1,j} \right|$$

11. Procédé selon l'une quelconque des revendications 1 à 10, caractérisé en ce que lesdites fonctions de référence appartiennent au groupe comprenant les fonctions des types suivants :

   - mesure(s) de qualité = f(objectif(s) de compression et/ou mesure(s) du résultat de compression et/ou caractéristique(s) de l'image);
   - objectif(s) de compression = f(condition(s) de compression et/ou caractéristique(s) de l'image et/ou mesure (s) de qualité).

12. Procédé selon l'une quelconque des revendications 1 à 11, caractérisé en ce que lesdites fonctions de référence s'expriment sous au moins une des formes appartenant au groupe comprenant :

   - des abaques ;
   - des courbes ;
   - des tables de valeurs ;
   - des fonctions mathématiques ;
   - des règles de décision.

13. Procédé selon l'une quelconque des revendications 1 à 12, caractérisé en ce que lesdites fonctions de référence sont obtenues selon les étapes suivantes :

   - analyse des résultats de compression, pour chacune desdits échantillons test et pour chacune desdites conditions de compression ;
   - lissage des résultats de ladite analyse.

14. Procédé selon l'une quelconque des revendications 1 à 13, caractérisé en ce que lesdits échantillons de test et/ou lesdits ensembles de données d'image appartiennent au groupe comprenant :

   - des images ;
   - des portions ou des zones d'image ;
   - des séries d'images similaires ;
   - des séquences d'images animées.

15. Procédé selon l'une quelconque des revendications 1 à 14, caractérisé en ce que ladite étape de sélection tient compte également d'au moins un des critères secondaires appartenant au groupe comprenant :

   - la taille ou le format de l'ensemble de données d'image ;
   - la luminosité de l'ensemble de données d'image.

16. Procédé selon l'une quelconque des revendications 1 à 15, caractérisé en ce qu'il comprend une étape de focalisation, permettant de sélectionner au moins une portion dans une image et/ou au moins une image dans une séquence d'images et/ou une portion identique d'image dans une séquence d'images.

17. Procédé selon la revendication 16, caractérisé en ce qu'on fixe d'une part au moins un objectif de compression pour la ou lesdites portions d'image et/ou au moins une image dans une séquence d'images et/ou une portion identique d'image dans une séquence d'images, et d'autre part au moins un objectif de compression pour le reste des données d'image.

18. Procédé selon la revendication 16, caractérisé en ce qu'on fixe d'une part au moins un objectif de compression pour la ou lesdites portions d'image et/ou au moins une image dans une séquence d'images et/ou une portion identique d'image dans une séquence d'images, et d'autre part pour ledit ensemble des données d'image.

19. Procédé selon l'une quelconque des revendications 1 à 18, caractérisé en ce qu'il comprend une étape de visualisation continue d'un ensemble de données d'image en cours de décompression.

20. Procédé selon la revendication 19 et l'une quelconque des revendications 16 à 18, caractérisé en ce que ladite étape de focalisation peut être mise en oeuvre sur un ensemble de données d'image en cours de décompression.

21. Procédé selon l'une quelconque des revendications 1 à 20, caractérisé en ce que ladite pluralité d'échantillons de test est choisie en fonction d'un ou plusieurs types d'ensemble de données d'images et/ou peut être complétée à tout moment.

22. Procédé selon l'une quelconque des revendications 1 à 21, caractérisé en ce que ladite phase d'initialisation comprend une étape de définition de paramètres permettant un paramétrage uniforme, associant à l'ensemble desdites conditions de compression les mêmes paramètres de qualité de reconstruction et de taux de compression.

23. Procédé selon l'une quelconque des revendications 1 à 22, caractérisé en ce que ladite phase de sélection comprend une étape de gestion des conflits, en cas d'incompatibilité entre lesdits objectifs de compression et/ou dans le cadre de la mise en oeuvre ladite étape de focalisation.

24. Procédé selon l'une quelconque des revendications 16 à 23, caractérisé en ce qu'il se présente sous la forme d'une boîte à outil logicielle comprenant notamment les outils suivants :

   - un outil de sélection mettant en oeuvre ladite étape de sélection ;
   - au moins deux algorithmes de compression ;
   - un outil de focalisation, mettant en oeuvre ladite étape de focalisation.

14      10      11

Besoins
utilisateur → | MODE
ADAPTATIF | → Algorithme de
compression

Caractéristiques
de l'image →      → Paramètres
de l'algorithme

13      12

## Fig. 1

BANQUE D'IMAGES TEST ——— 21

CARACTERISTIQUE
DE L'IMAGE      ALGORITHMES DE
COMPRESSION

22     •••     23

ANALYSE

24      25

FONCTIONS

## Fig. 2

31

FOCALISATION      39

CARACTERISTIQUE DE L'IMAGE      32

33      25

SELECTION

36      37

COMPRESSION      38

## Fig. 3

Fig. 4 (JPEG)

Fig. 5 (EZW)

Fig. 6 (FISHER)

**Office européen des brevets**

## RAPPORT DE RECHERCHE EUROPEENNE

Numéro de la demande

EP 98 40 0612

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 583 107 A (CANON KK) 16 février 1994 * revendications 1,2,11 * | 1,2 | G06T9/00 |
| X | EP 0 512 174 A (SEMAPHORE INC) 11 novembre 1992 * page 5, ligne 1 – ligne 5; revendications 1,5 * | 1,2 | |
| A | SHAPIRO J M: "Smart compression using the embedded zerotree wavelet (EZW) algorithm" CONFERENCE RECORD OF THE TWENTY-SEVENTH ASILOMAR CONFERENCE ON SIGNALS, SYSTEMS AND COMPUTERS (CAT. NO.93CH3312-6), PROCEEDINGS OF 27TH ASILOMAR CONFERENCE ON SIGNALS, SYSTEMS AND COMPUTERS, PACIFIC GROVE, CA, USA, 1-3 NOV. 1993, ISBN 0-8186-4120-7, 1993, LOS ALAMITOS, CA, USA, IEEE COMPUT. SOC. PRESS, USA, pages 486-490 vol.1, XP000463745 * page 489, colonne de gauche, alinéa 1 * | 1,2 | |

DOMAINES TECHNIQUES RECHERCHES (Int.Cl.6)

G06T

Le présent rapport a été établi pour toutes les revendications

| Lieu de la recherche | Date d'achèvement de la recherche | Examinateur |
|---|---|---|
| LA HAYE | 26 mai 1998 | Pierfederici, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)